# EUROPÄISCHE PATENTSCHRIFT

(11) **EP 3 458 705 B1**
(45) Veröffentlichungstag und Bekanntmachung des Hinweises auf die Patenterteilung: **22.09.2021**
(21) Anmeldenummer: 17713004.4
(22) Anmeldetag: 23.03.2017
(51) Int. Cl.: F02M 59/48, B23K 11/093

(54) **KRAFTSTOFF-HOCHDRUCKPUMPE**
HIGH-PRESSURE FUEL PUMP
POMPE À CARBURANT HAUTE PRESSION

(30) Priorität: 19.05.2016 DE 102016208625; 22.07.2016 DE 102016213451
(43) Veröffentlichungstag der Anmeldung: 27.03.2019
(73) Patentinhaber: Robert Bosch GmbH, 70442 Stuttgart (DE)
(72) Erfinder: STRITZEL, Soeren, Rayong 21140 (TH); BUERNER, Erich, 91207 Lauf (DE); ROPERTZ, Peter, 71739 Oberriexingen (DE)
(86) Internationale Anmeldenummer: PCT/EP2017/056938
(87) Internationale Veröffentlichungsnummer: WO 2017/198371

(56) Entgegenhaltungen:
- EP-A2- 2 055 934
- DE-A1- 10 322 595
- DE-A1-102004 015 440
- JP-A- 2011 177 715
- JP-A- 2013 199 873

## Beschreibung

### Stand der Technik

Die Erfindung betrifft eine Kraftstoff-Hochdruckpumpe nach dem Oberbegriff des Anspruchs 1.

Eine solche Kraftstoff-Hochdruckpumpe ist aus der DE 10 2005 007 806 A1 bekannt und umfasst ein Pumpengehäuse und einen Befestigungsflansch. Der Befestigungsflansch ist am Pumpengehäuse durch eine Verschweißung befestigt und weist mindestens einen Verbindungsbereich auf, an dem in Einbaulage ein Verbindungselement angreift. Über dieses kann die Kolbenpumpe an einem Haltekörper befestigt werden. Die EP2055934 A2 und die JP2013199873 A offenbaren weitere Kraftstoff-Hochdruckpumpen.

### Offenbarung der Erfindung

Die der Erfindung zugrunde liegende Aufgabe wird durch eine Kraftstoff-Hochdruckpumpe mit den Merkmalen des Anspruchs 1 gelöst. Vorteilhafte Weiterbildungen der Erfindung sind in Unteransprüchen angegeben. Darüber hinaus finden sich für die Erfindung wichtige Merkmale in der nachfolgenden Beschreibung und in der Zeichnung. Diese Merkmale können für die Erfindung in Alleinstellung und in unterschiedlichen Kombinationen wichtig sein.

Dank der Erfindung wird verhindert, dass beim Schweißvorgang der am Rand des Schweißbereichs austretende Schweißwulst mit seiner freien Oberfläche in Kontakt mit der kalten Gehäusewand, beispielsweise des Pumpengehäuses oder des Befestigungsflansches, kommt. Hierdurch wird wiederum verhindert, dass Schweißspritzer gebildet werden, welche das Pumpengehäuse und/oder den Befestigungsflansch und/oder den Schweißbereich (im allgemeinen als "Schweißnaht" bezeichnet) beschädigen können. Die Erfindung sorgt somit dafür, dass die Verbindung zwischen dem Pumpengehäuse und dem Befestigungsflansch optimal und ohne negative Auswirkungen auf die beteiligten Komponenten hergestellt wird.

Dabei ist es besonders vorteilhaft, wenn die Verschweißung mittels Kondensatorentladungsschweißen hergestellt wird. Hierbei handelt es sich um eine besonders kostengünstige und schnelle Art des Schweißens. Beim Kondensatorentladungsschweißen wird die zum Schweißen benötigte Energie aus vorher geladenen Kondensatoren über einen Thyristor auf einen Schweißtransformator geschaltet. Die Ladezeiten liegen dabei im Bereich zwischen 0,5 s und 2s, die Schweißzeiten zwischen 3 und 10 ms. Der durch die Schweißvorbereitung angelegte Wirkwiderstand lässt parallel dazu die Temperatur an der Schweißstelle mit sehr hoher Geschwindigkeit ansteigen. Dieser schnelle Temperaturanstieg erhitzt die Schweißzone bevor die Wärme abfließen kann und verhindert somit eine Erwärmung der Bereiche um die Schweißstelle. Bereits nach wenigen Millisekunden ist der Buckel geschweißt, ohne dass zuvor die Umgebung der Schweißstelle vollständig durchgewärmt wurde. Durch diese Konzentration der eingebrachten Energie auf das zu erwärmende Volumen ist der Wirkungsgrad beim Kondensatorentladungsschweißen sehr hoch. Es ist somit ein sehr wirtschaftliches Verfahren.

Vorgeschlagen wird ferner, dass der Aufnahmeraum in radialer Richtung gesehen breiter ist als der Schweißwulst. Hierdurch wird besonders effektiv verhindert, dass die freie Oberfläche des Schweißwulstes in Kontakt mit der kalten Wand des Pumpengehäuses oder des Befestigungsflansches kommt.

Bei einem umlaufenden Befestigungsflansch ist es vorteilhaft, wenn der Aufnahmeraum ein Ringraum ist. Er kann dann beispielsweise auf sehr einfache und kostengünstige Art und Weise durch eine umlaufende Nut hergestellt werden.

Erfindungsgemäß umfasst die Kraftstoff-Hochdruckpumpe eine Öffnung, welche den Aufnahmeraum mit der Umgebung verbindet. Hierdurch wird verhindert, dass durch den Schweißvorgang und die Temperaturerhöhung im Bereich der Schweißstelle bzw. der Schweißverbindung in dem Aufnahmeraum ein unerwünschter hoher Druck entsteht.

Eine andere Weiterbildung zeichnet sich dadurch aus, dass am Pumpengehäuse ein Freistichabschnitt vorhanden ist, der einen kleineren Durchmesser aufweist als ein Kontaktabschnitt des Pumpengehäuses, wobei der Kontaktabschnitt den Befestigungsflansch vorzugsweise im Presssitz kontaktiert. Dies gestattet eine einfache Montage des Befestigungsflansches, da das Aufpressen des Befestigungsflansches auf das Pumpengehäuse nur im Bereich des Kontaktabschnitt des erfolgt.

Nachfolgend werden Ausführungsformen der Erfindung unter Bezugnahme auf die beiliegende Zeichnung erläutert. In der Zeichnung zeigen:
- Figur 1: einen Längsschnitt durch eine erste Ausführungsform einer Kraftstoff-Hochdruckpumpe mit einem Pumpengehäuse, einem Befestigungsflansch und einem Schweißbereich;
- Figur 2: eine vergrößerte Detaildarstellung des Schweißbereichs von Figur 1;
- Figur 3: eine Darstellung ähnlich zu Figur 2; und
- Figur 4: eine Darstellung ähnlich zu Figur 2.

Elemente und Bereiche, welche in den nachfolgenden Figuren äquivalente Funktionen aufweisen, tragen die gleichen Bezugszeichen.

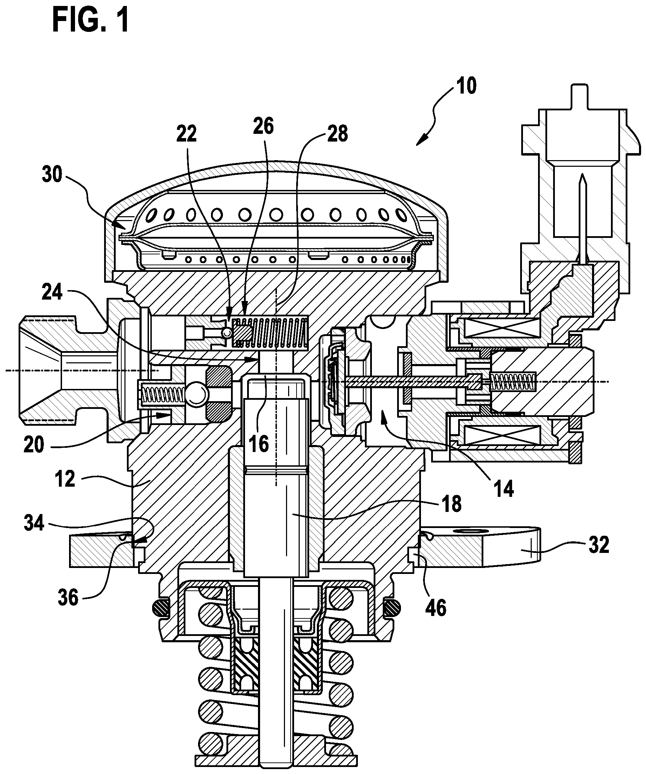

In Figur 1 trägt eine Kraftstoff-Hochdruckpumpe für eine nicht näher dargestellte Brennkraftmaschine insgesamt das Bezugszeichen 10. Die Kraftstoff-Hochdruckpumpe 10 weist ein insgesamt im Wesentlichen zylindrisches Pumpengehäuse 12 auf, in oder an dem die wesentlichen Komponenten der Hochdruck-Kraftstoffpumpe 10 angeordnet sind. So weist die Hochdruck-Kraftstoffpumpe 10 ein Einlass-/Mengensteuerventil 14, einen in einem Förderraum 16 angeordneten, durch eine nicht gezeigte Antriebswelle in eine Hin-und Herbewegung versetzbaren Förderkolben 18, ein Auslassventil 20 und ein Druckbegrenzungsventil 22 auf.

In dem Gehäuse 12 ist ein erster Kanal 24 vorhanden, der sich koaxial zum Förderraum 16 und zum Förderkolben 18 erstreckt und der vom Förderraum 16 zu einem zweiten Kanal 26 führt, der in einem Winkel von 90° zum ersten Kanal 24 angeordnet ist und in dem das Druckbegrenzungsventil 22 aufgenommen ist. Eine Längsachse des Pumpengehäuses 12 trägt in Figur 1 insgesamt das Bezugszeichen 28. In Figur 1 oben ist in dem Pumpengehäuse 12 ein Druckdämpfer 30 angeordnet.

Im Betrieb wird vom Förderkolben 18 bei einem Saughub Kraftstoff über das Einlass- und Mengensteuerventil 14 in den Förderraum 16 angesaugt. Bei einem Förderhub wird der im Förderraum 16 befindliche Kraftstoff verdichtet und über das Auslassventil 20 beispielsweise in einen Hochdruckbereich (ohne Bezugszeichen), beispielsweise zu einer Kraftstoff-Sammelleitung ("Rail") ausgestoßen, wo der Kraftstoff unter hohem Druck gespeichert ist. Die Kraftstoffmenge, die bei einem Förderhub ausgestoßen wird, wird dabei durch das elektromagnetisch betätigte Einlass- und Mengensteuerventil 14 eingestellt. Bei einem unzulässigen Überdruck im Hochdruckbereich öffnet das Druckbegrenzungsventil 22, wodurch Kraftstoff aus dem Hochdruckbereich in den Förderraum 16 strömen kann.

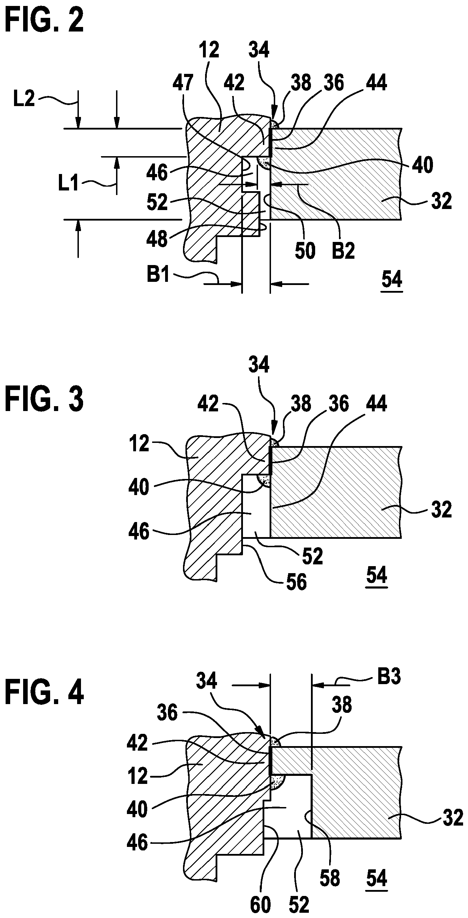

Bei der Hochdruck-Kraftstoffpumpe 10 handelt es sich um eine sogenannte "Steckpumpe", die in eine entsprechende Öffnung in einen Zylinderkopf der Brennkraftmaschine eingesteckt werden kann. Am Pumpengehäuse 12 ist ein umlaufender und ringförmiger Befestigungsflansch 32 befestigt, mittels dem die Hochdruck-Kraftstoffpumpe 10 am Zylinderkopf befestigt, beispielsweise verschraubt werden kann. Wie im Detail aus Figur 2 hervorgeht, ist der Befestigungsflansch 32 am Pumpengehäuse 12 durch eine Verschweißung 34 befestigt, die einen Schweißbereich 36 und zwei seitlich von dem Schweißbereich 36 angeordnete Schweißwulste 38 und 40 umfasst. Die Verschweißung 34 ist mittels Kondensatorentladungsschweißen hergestellt.

Eine Länge L1 des Schweißbereichs 36 ergibt sich aus einer Überdeckung eines radial äußeren Kontaktabschnitts 42 am Pumpengehäuse 12 mit einem radial inneren Kontaktabschnitt 44 am Befestigungsflansch 32, der eine Länge bzw. Höhe L2 hat. Die Kontaktabschnitte 42 und 44 kontaktieren sich vorliegend im Presssitz. Unmittelbar unterhalb vom Schweißbereich 36 ist bei der in den Figuren 1 und 2 dargestellten Ausführungsform auf der Außenseite des Pumpengehäuses 12 ein als Ringraum ausgebildeter Aufnahmeraum 46 vorhanden, der durch eine umlaufende Nut 47 in einer Außenwand des Pumpengehäuses 12 gebildet ist.

Der in Figur 2 untere Schweißwulst 40 ist in dem Aufnahmeraum 46 angeordnet. Dabei ist der Aufnahmeraum 46 in radialer Richtung gesehen breiter als der Schweißwulst 40. Eine Erstreckung B1 des Aufnahmeraums 46 ist in Figur 2 also größer als eine Erstreckung B2 des Schweißwulstes 40. Analog hierzu ist der Aufnahmeraum 46 auch in axialer Richtung, also parallel zur Längsachse 28, höher als der Schweißwulst 40. Aus Gründen der Übersichtlichkeit sind die entsprechenden Erstreckungen in Figur 2 jedoch nicht dargestellt und nicht mit Bezugszeichen versehen.

Aufgrund der Größenverhältnisse des Aufnahmeraums 46 relativ zum unteren Schweißwulst 40 wird sichergestellt, dass eine freie Oberfläche des Schweißwulstes 40, die vorliegend im Querschnitt idealisiert die Form eines Viertelkreises hat, mit der radial äußeren Umfangswand des Pumpengehäuses 12 nicht in Kontakt ist. Wie aus Figur 2 hervorgeht, ist zwischen einer unterhalb von dem Aufnahmeraum 46 vorhandenen radial äußeren Mantelfläche 48 des Pumpengehäuses 12 und einer radial inneren Mantelfläche 50 des Befestigungsflansches 32 ein umlaufender Spalt vorhanden, der eine Öffnung 52 bildet, welche den Aufnahmeraum 46 mit einer Umgebung 54 verbindet.

Aus Figur 2 ist ersichtlich, dass der Durchmesser des Pumpengehäuses 12 im Bereich der in der Figur unterhalb vom Aufnahmeraum 46 angeordneten radial äußeren Mantelfläche 48 kleiner ist als im Bereich des in der Figur oberhalb von dem Aufnahmeraum 46 angeordneten Kontaktabschnitts 42. Dies ermöglicht es, den Befestigungsflansch 32 des Pumpengehäuses 12 im Bereich der radial äußeren Mantelfläche 48 als "Spanndurchmesser" bei einer Vormontage des Befestigungsflansches 32 am Pumpengehäuse 12 zu nutzen.

Eine alternative Ausführungsform, die nicht durch die beanspruchte Erfindung abgedeckt ist, zeigt Figur 3. Bei dieser wird der Aufnahmeraum 46 nicht durch eine Nut gebildet, sondern einfach durch einen sogenannten Einstich 56 am Pumpengehäuse 12, wobei der Einstich 56 in der Figur unmittelbar unterhalb von dem Kontaktabschnitt 42 angeordnet ist.

Bei der Ausführungsform der Figur 4, die nicht durch die beanspruchte Erfindung abgedeckt ist, wird der Aufnahmeraum 46 durch einen Einstich 58 am Befestigungsflansch 32 gebildet, wobei der Einstich 58 in der Figur unmittelbar unterhalb von dem Kontaktabschnitt 44 angeordnet ist. Darüber hinaus ist bei der in Figur 4 gezeigten Ausführungsform zusätzlich auch am Pumpengehäuse 12 gegenüber von dem Einstich 58 am Befestigungsflansch 32 eine Freistich 60 vorhanden, der der allerdings etwas von dem Kontaktabschnitt 42 beabstandet ist und der einen nur geringfügig geringeren Durchmesser aufweist als der Kontaktabschnitt 42.

Der Freistich 60 ermöglicht eine einfache Montage des Befestigungsflansches 32, da das Aufpressen des Befestigungsflansches 32 auf das Pumpengehäuse 12 nur im Bereich des Kontaktabschnitts 42 erfolgt. Im übrigen sei darauf hingewiesen, dass über eine radiale Abmessung B3, welche die Tiefe des Einstichs 58 am Befestigungsflansch 32 angibt, die elastischen Eigenschaften des Befestigungsflansches 32 in diesem Bereich beeinflusst werden können. Hierdurch kann der Einfluss der Verschraubung des Befestigungsflansches am Zylinderkopf auf die Belastung der Verschweißung 34 eingestellt werden. Auch die geometrische Gestaltung des Kontaktabschnitts 44 am Befestigungsflansch 32 bietet eine solche Beeinflussungsmöglichkeit.

## Patentansprüche

1. Kraftstoff-Hochdruckpumpe (10) für ein Kraftstoff-Einspritzsystem einer Brennkraftmaschine, mit einem Pumpengehäuse (12) und mit mindestens einem ringförmigen Befestigungsflansch (32), wobei der Befestigungsflansch (32) radial außen am Pumpengehäuse (12) durch eine Verschweißung (34) befestigt ist, und wobei die Verschweißung (34) einen Schweißbereich und mindestens einen seitlich vom Schweißbereich (34) angeordneten Schweißwulst (40) umfasst, wobei der Schweißwulst (40) in einem zwischen dem Pumpengehäuse (12) und dem Befestigungsflansch (3) gebildeten Aufnahmeraum (46) angeordnet ist und dass Kraftstoff-Hochdruckpumpe eine Öffnung (52) umfasst, welche den Aufnahmeraum (46) mit einer Umgebung (54) verbindet und dass der Aufnahmeraum (46), durch eine umlaufende Nut (47) in einer Außenwand des Pumpengehäuses (12) gebildet ist, **dadurch gekennzeichnet, dass** die umlaufende Nut (47) sich in radialer Richtung zwischen dem Pumpengehäuse und dem Befestigungsflansch (32) befindet.

2. Kraftstoff-Hochdruckpumpe (10) nach Anspruch 1, **dadurch gekennzeichnet, dass** die Verschweißung (34) mittels Kondensatorentladungsschweißen hergestellt wird.

3. Kraftstoff-Hochdruckpumpe (10) nach mindestens einem der vorhergehenden Ansprüche, **dadurch gekennzeichnet, dass** der Aufnahmeraum (46) in radialer Richtung gesehen breiter ist als der Schweißwulst (40).

4. Kraftstoff-Hochdruckpumpe (10) nach mindestens einem der vorhergehenden Ansprüche, **dadurch gekennzeichnet, dass** der Aufnahmeraum (46) ein Ringraum ist.

5. Kraftstoff-Hochdruckpumpe (10) nach mindestens einem der vorhergehenden Ansprüche, **dadurch gekennzeichnet, dass** am Pumpengehäuse (12) ein Freistich (60) vorhanden ist, der einen kleineren Durchmesser aufweist als ein Kontaktabschnitt (42) des Pumpengehäuses (12), wobei der Kontaktabschnitt (42) den Befestigungsflansch (32) vorzugsweise im Presssitz kontaktiert.

## Claims

1. High-pressure fuel pump (10) for a fuel injection system of an internal combustion engine, having a pump housing (12) and at least one annular fastening flange (32), wherein the fastening flange (32) is fastened radially on the outside of the pump housing (12) by a welded joint (34), and wherein the welded joint (34) comprises a weld region and at least one weld bead (40) arranged laterally with respect to the weld region (34), wherein the weld bead (40) is arranged in a receiving space (46) formed between the pump housing (12) and the fastening flange (3), and in that the high-pressure fuel pump comprises an opening (52) which connects the receiving space (46) to an environment (54), and in that the receiving space (46) is formed by a circumferential groove (47) in an outer wall of the pump housing (12), **characterized in that** the circumferential groove (47) is located in a radial direction between the pump housing and the fastening flange (32).

2. High-pressure fuel pump (10) according to Claim 1, **characterized in that** the welded joint (34) is produced by means of capacitor discharge welding.

3. High-pressure fuel pump (10) according to at least one of the preceding claims, **characterized in that** the receiving space (46) is wider than the weld bead (40) when viewed in the radial direction.

4. High-pressure fuel pump (10) according to at least one of the preceding claims, **characterized in that** the receiving space (46) is an annular space.

5. High-pressure fuel pump (10) according to at least one of the preceding claims, **characterized in that** a relief cut (60), which has a smaller diameter than a contact section (42) of the pump housing (12), is present on the pump housing (12), wherein the contact section (42) makes contact with the fastening flange (32), preferably with a press fit.

## Revendications

1. Pompe à carburant haute pression (10) pour un système d'injection de carburant d'un moteur à combustion interne, comprenant un corps de pompe (12) et au moins une bride de fixation annulaire (32), la bride de fixation (32) étant fixée au corps de pompe (12) radialement à l'extérieur par une soudure, et la soudure (34) comprenant une zone de soudure et au moins un bourrelet de soudure (40) disposé latéralement par rapport à la zone de soudure (34), le bourrelet de soudure (40) étant disposé dans un espace de réception (46) formé entre le corps de pompe (12) et la bride de fixation (3), et en ce que la pompe à carburant haute pression comprend une ouverture (52) qui relie l'espace de réception (46) à un environnement (54), et en ce que l'espace de réception (46) est formé par une rainure périphérique (47) dans une paroi extérieure du corps de pompe (12),
**caractérisée en ce que** la rainure périphérique (47) se trouve en direction radiale entre le corps de pompe et la bride de fixation (32).

2. Pompe à carburant haute pression (10) selon la revendication 1, **caractérisée en ce que** la soudure (34) est réalisée au moyen d'un soudage par décharge de condensateurs.

3. Pompe à carburant haute pression (10) selon au moins l'une des revendications précédentes, **caractérisée en ce que** l'espace de réception (46) est plus large que le bourrelet de soudure (40), vu dans la direction radiale.

4. Pompe à carburant haute pression (10) selon au moins l'une des revendications précédentes, **caractérisée en ce que** l'espace de réception (46) est un espace annulaire.

5. Pompe à carburant haute pression (10) selon au moins l'une des revendications précédentes, **caractérisée en ce que** sur le corps de pompe (12), il existe une rainure de dégagement (60) qui présente un diamètre inférieur à celui d'une partie de contact (42) du corps de pompe (12), la partie de contact (42) entrant en contact avec la bride de fixation (32) de préférence en ajustement serré.
